# FASCICULE DE BREVET EUROPEEN

(11) **EP 2 755 795 B1**
(45) Date de publication et mention de la délivrance du brevet: **18.04.2018**
(21) Numéro de dépôt: 12750445.4
(22) Date de dépôt: 23.07.2012
(51) Int. Cl.: B23P 19/04, B23P 21/00, B25H 1/00, B23Q 1/54

(54) **DISPOSITIF D'ASSEMBLAGE DE MOTEUR ET PROCÉDÉ D'ASSEMBLAGE ET DE CONTRÔLE D'UN TEL DISPOSITIF D'ASSEMBLAGE**
VORRICHTUNG ZUR MONTAGE EINES MOTORS UND VERFAHREN ZUR MONTAGE UND ÜBERWACHUNG EINER SOLCHEN MOTORVORRICHTUNG
DEVICE FOR ASSEMBLING AN ENGINE AND METHOD FOR ASSEMBLING AND MONITORING SUCH ASSEMBLY DEVICE

(30) Priorité: 12.09.2011 FR 1158084
(43) Date de publication de la demande: 23.07.2014
(73) Titulaire: Renault S.A.S., 92100 Boulogne-Billancourt (FR)
(72) Inventeur: GOURLAY, Yves, F-78180 Montigny le Bretonneux (FR)
(86) Numéro de dépôt international: PCT/FR2012/051740
(87) Numéro de publication internationale: WO 2013/038080

(56) Documents cités:
- DE-A1- 4 320 946
- DE-A1-102004 030 256
- JP-A- 4 310 333
- US-A- 4 239 196
- US-A1- 2007 069 190
- US-B1- 6 491 293

## Description

La présente invention concerne le domaine des lignes d'assemblage de moteurs de véhicules automobiles et, notamment les dispositifs d'assemblage de moteurs.

Les dispositifs d'assemblage, ou palettes d'assemblage moteur sont conçues pour supporter et transporter le moteur pendant son assemblage, son habillage ou son contrôle, notamment les moteurs thermiques. Généralement, chaque ligne d'assemblage est reconsidérée pour chaque moteur, nécessitant une palette d'assemblage spécifique à un moteur donné. De telles palettes doivent passer dans des postes automatiques nécessitant une précision inférieure à 1,4mm, être ergonomiques pour l'opérateur en proposant au moins deux rotations, et être flexible afin de pouvoir supporter plusieurs types de moteur.

Il existe actuellement deux types de palettes, les palettes classiques et les palettes flexibles. Les palettes classiques forment un bloc unitaire et permettent d'obtenir une bonne précision à faible coût. Toutefois ce type de palette n'est pas flexible, de sorte qu'il est très difficile d'accéder au moteur. Les palettes flexibles permettent un accès au moteur plus aisé, mais ne sont pas précises de sorte qu'une telle palette ne peut pas être insérée sur une ligne automatisée. Par ailleurs, les palettes flexibles sont limitées en ergonomie, notamment lorsque l'on a beaucoup d'éléments à assembler dans certaines zones les moins accessibles et ne conviennent donc pas aux moteurs diesel.

On peut se référer au document US 4, 239, 196 qui décrit une palette d'assemblage flexible montée sur des roulettes et comprenant une embase extensible reliée à un plateau inclinable sur lequel vient se fixer le moteur par l'intermédiaire de visseries.

On peut également se référer au document US 6, 491, 293 qui décrit un support rotatif de moteur permettant la rotation du moteur selon un axe.

On peut également se référer au document DE4320946 qui décrit un support d'assemblage pour une ligne d'assemblage d'un moteur comprenant un plateau horizontal rotatif autour d'un axe vertical, un support supportant un bras rotatif autour d'un axe horizontal et destiné à recevoir un composant à assembler, par l'intermédiaire d'une interface. Toutefois, la fixation du moteur sur de telles palettes d'assemblage n'est pas suffisamment précise et ne permet pas de s'adapter à différents moteurs, ni à des lignes d'assemblage automatisées. En effet, de telles palettes contiennent trop de côtes et ne peuvent pas être précises. Seules des palettes coûteuses peuvent remédier à cet inconvénient.

Il existe donc un besoin de concevoir une palette d'assemblage flexible pour les lignes automatisées.

Un objectif de l'invention est donc de pallier ces inconvénients et de fournir un dispositif d'assemblage ou palette d'assemblage d'un moteur capable de s'adapter à de nombreux moteurs tout en étant ergonomique grâce à deux rotations et à faible coût.

Un autre objectif de l'invention est d'améliorer la précision en réduisant les intervalles de tolérances afin d'éviter au maximum les réglages manuels en vue d'être complètement automatisé.

Selon un mode de réalisation, l'invention a pour objet un dispositif d'assemblage de moteur, destiné à être inséré sur une ligne d'assemblage, comprenant une embase horizontale, des premiers moyens de rotation par rapport à un premier axe de rotation perpendiculaire à l'embase, des deuxièmes moyens de rotation par rapport à un deuxième axe de rotation perpendiculaire au premier axe de rotation et une interface destinée à relier le moteur à l'embase.

Le dispositif d'assemblage comprend des moyens de fixation réversible de l'interface sur l'embase.

Ainsi, l'interface est démontable et interchangeable, ce qui permet de s'adapter à de nombreux moteurs, ainsi que de coopérer directement avec un banc de contrôle du moteur sans changer de palette.

Avantageusement, les moyens de fixation réversible comprennent une équerre de bridage comprenant des centreurs capables de s'insérer dans des perçages correspondants sur l'interface et des moyens de bridage capables de fixer l'interface démontable sur l'équerre de bridage.

Les premiers moyens de rotation comprennent, par exemple, un plateau horizontal relié à une portion verticale, formant première équerre de rotation. Ledit plateau horizontal est en contact avec l'embase par l'intermédiaire d'éléments roulants permettant ainsi une première rotation à 360° autour d'un axe perpendiculaire à l'embase horizontale.

Le plateau horizontal peut être relié à la portion verticale par l'intermédiaire d'un premier moyen de réglage en position. Les moyens de réglage en position directement à l'assemblage de la palette permettent de réduire au mieux les intervalles de tolérance et ainsi d'obtenir une précision accrue. En effet, la limitation du nombre de côtes par calage permet de réduire nettement les intervalles de tolérance.

Avantageusement, les deuxièmes moyens de rotation comprennent un moyen de mise en rotation fixé à une extrémité de la première équerre de rotation et une deuxième équerre de rotation entraînée en rotation par le moyen de mise en rotation et fixé à l'interface démontable.

La deuxième équerre de rotation peut être reliée au moyen de mise en rotation par un deuxième moyen de réglage en position.

Le dispositif d'assemblage comprend, en outre, des moyens de guidage en translation de l'équerre de bridage par rapport à la deuxième équerre de rotation.

Par exemple, la première équerre de rotation comprend des moyens d'arrêt en rotation de la deuxième équerre de rotation.

Le dispositif d'assemblage peut comprendre un ressort de rappel relié à l'équerre de bridage et à la deuxième équerre de rotation afin de créer une force de rappel tendant à éloigner l'équerre de bridage de l'interface.

Les moyens de bridage comprennent, par exemple, des visseries.

Avantageusement, l'interface démontable comprend des moyens de centrage et de fixation à un moteur.

Selon un second aspect, l'invention concerne un procédé d'assemblage et de contrôle du dispositif d'assemblage selon l'une des revendications précédentes, dans lequel on positionne l'embase horizontale sur un support d'assemblage et de contrôle par des premiers moyens de centrage, on contrôle la position de l'embase par des premiers moyens de contrôle, on positionne les premiers moyens de rotation sur l'embase, on contrôle la position des premiers moyens de rotation par des deuxièmes moyens de contrôle, on positionne les deuxièmes moyens de rotation sur les premiers moyens de rotation et les moyens de fixation réversible et on contrôle la position des deuxièmes moyens de rotation par des troisièmes moyens de contrôle.

Le procédé d'assemblage et de contrôle peut être réalisé sur un même poste, ce qui permet de s'assurer rapidement de la qualité du montage et de contrôler ultérieurement les côtes de la palette.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue de face d'un dispositif d'assemblage selon l'invention ;
- la figure 2 est une vue de dessus du dispositif d'assemblage selon la figure 1 ;
- la figure 3 illustre une interface de liaison selon l'invention ;
- les figures 4a et 4b illustrent la position embrayée ou débrayée de l'interface ; et
- les figures 5a à 7b représentent schématiquement les étapes d'assemblage et de contrôle du dispositif d'assemblage selon la figure 1.

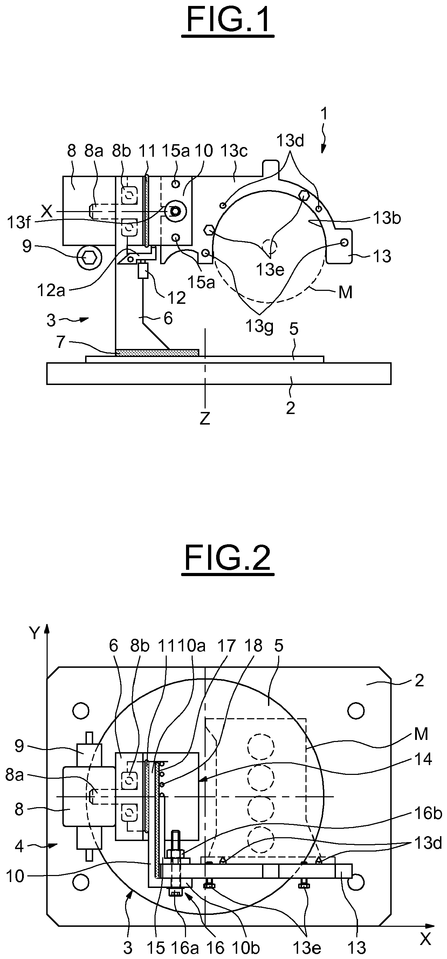

Tel qu'illustré sur les figures 1 et 2, un dispositif d'assemblage, ou palette d'assemblage, référencé 1 dans son ensemble, est destiné à supporter un moteur M, tel que par exemple un moteur thermique et à être inséré sur une ligne d'assemblage automatisée (non représentée).

Le dispositif d'assemblage 1 comprend une embase horizontale 2 s'étendant sur un plan XY, des premiers moyens de rotation 3 autour d'un premier axe de rotation Z, perpendiculaire au plan XY de l'embase 2 et des deuxièmes moyens de rotation 4 autour d'un deuxième axe de rotation X, perpendiculaire au premier axe de rotation Z.

L'embase 2 est de forme générale parallélépipédique et peut être disposée sur des éléments roulants (non représentés) pour une meilleure ergonomie.

Les premiers moyens de rotation 3 comprennent un plateau horizontal 5 disposé sur l'embase horizontale 2 et une portion verticale 6 en saillie du plateau horizontal 5 suivant l'axe Z, formant une première équerre de rotation. Le plateau horizontal 5 est de forme générale circulaire et est en contact avec l'embase 2 par l'intermédiaire d'éléments roulants (non représentés), tels que par exemple un roulement central ou des diabolos disposés sur la périphérie du plateau horizontal 5, permettant la rotation à 360° de la première équerre de rotation 3 autour de l'axe Z. Le plateau horizontal 5 est relié à la portion verticale 6 par l'intermédiaire d'un premier moyen de réglage en position 7, tel que des cales permettant un réglage suivant l'axe Z. Les moyens de réglage en position 7 insérés directement à l'assemblage de la palette d'assemblage 1 permettent de réduire au mieux les intervalles de tolérance et ainsi d'obtenir une précision accrue de la palette 1. En effet, la limitation du nombre de côtes par calage permet de réduire nettement les intervalles de tolérance. La première équerre de rotation 3 à 360° est ainsi réglée en hauteur par une ou plusieurs cales 7, et n'a donc pas besoin d'être précise.

Les deuxièmes moyens de rotation 4 comprennent un moyen de mise en rotation 8, tel que par exemple un réducteur, fixé à une extrémité de la première équerre de rotation 3, opposée au plateau horizontal 5 et animé par une visseuse extérieure manuelle ou automatique 9. Les deuxièmes moyens de rotation 4 comportent en outre une deuxième équerre de rotation 10 entraînée en rotation par le moyen de mise en rotation 8. La deuxième équerre de rotation 10 présente une forme générale de « L » comportant une portion verticale 10a en contact avec le moyen de mise en rotation 8 par l'intermédiaire d'un arbre 8a disposé entre des roulements 8b, et une portion transversale 10b perpendiculaire à la portion verticale 10a. La deuxième équerre de rotation 10 est reliée au moyen de mise en rotation 8 par un deuxième moyen de réglage en position 11, tel que des cales permettant un réglage suivant l'axe X. La deuxième équerre de rotation 10 est ainsi réglée en position par une ou plusieurs cales 11, la rotation à 360° est entraînée par le réducteur 8, et l'horizontalité précise est assurée par deux butées escamotables 12 disposées de part et d'autre de la première équerre de rotation 3 et qui peuvent être réglées en hauteur par exemple par deux cales (non représentées), ou par un levier 12a.

Le dispositif d'assemblage 1 comprend en outre une interface de liaison 13 destinée à relier le moteur M à l'embase horizontale 2 par l'intermédiaire des équerres de rotation 3, 10 et de moyens de fixation réversible 14 de l'interface 13 sur l'embase 2, de sorte que l'interface 13 est démontable. Les moyens de fixation réversible 14 comprennent une équerre de bridage 15 comportant des partie en saillies formant centreurs 15a capables de s'insérer dans des perçages correspondants 13a sur l'interface 13 et des moyens de bridage 16 capables de fixer l'interface démontable 13 sur l'équerre de bridage 15. L'équerre de bridage 15 assure ainsi le centrage précis grâce aux deux centreurs coniques 15a ainsi que le bridage de l'interface 13 grâce au système vis-écrou 16 animé par une visseuse extérieure manuelle ou automatique (non représentée).

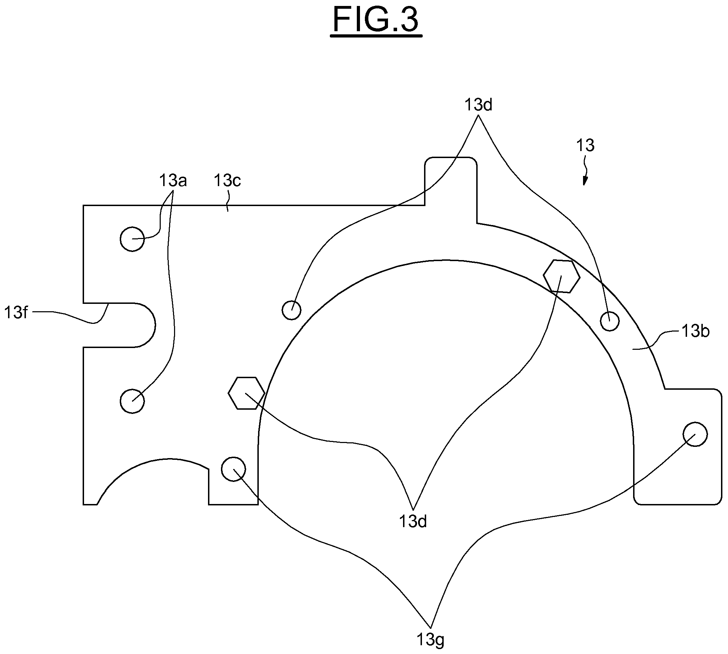

L'interface démontable 13 présente une première portion 13b de préhension du moteur semi-circulaire et une deuxième portion 13c substantiellement parallélépipédique destinée à être fixée sur l'équerre de bridage 15. Telle qu'illustrée sur les figure 2 et 3, la première portion 13b de préhension comporte des moyens de centrage 13d du moteur M et deux perçages (non représentés) permettant la fixation au moteur par des vis 13e. L'interface 13 est ainsi positionnée avec précision sur le moteur M par deux centreurs 13d et fixée au moteur M par des vis 13e. L'interface 13 est démontable et débrayable de manière manuelle ou automatique et comporte en outre deux alésages 13a précis coopérant avec les centreurs 15a de l'équerre de bridage 15 et un trou oblong 13f débouchant destiné à coopérer avec les moyens de bridage 16. L'interface 13 comporte également deux perçages 13g permettant de se fixer à un banc d'essai (non représenté) entre l'interface de liaison 13 et le moteur M, afin de contrôler le moteur M.

Les moyens de bridage 16 comprennent une vis 16a coopérant avec un écrou 16b emprisonnés, de sorte qu'ils sont imperdables et anti-rotation. La vis 16a vient s'insérer dans un perçage 10c pratiqué sur la deuxième équerre de rotation 10, le trou oblong 13f de l'interface 13 et un perçage 15b pratiqué sur l'équerre de bridage 15. Par vissage de la vis 16a, l'interface 13 est bridée entre la deuxième équerre de rotation 10 et l'équerre de bridage 15.

Le dispositif d'assemblage 1 comporte en outre des moyens de guidage en translation 17, tel que des rails de guidage disposés sur la deuxième équerre de rotation 10 permettant la translation de l'équerre de bridage 15 par rapport à la deuxième équerre de rotation 10 lorsque la vis 16a est dévissée. Un ressort de rappel 18 est relié à cet effet à l'équerre de bridage 15 et au rail de guidage 17 afin de créer une force de rappel tendant à éloigner l'équerre de bridage 15 de l'interface 13 lors du dévissage de la vis 16a.

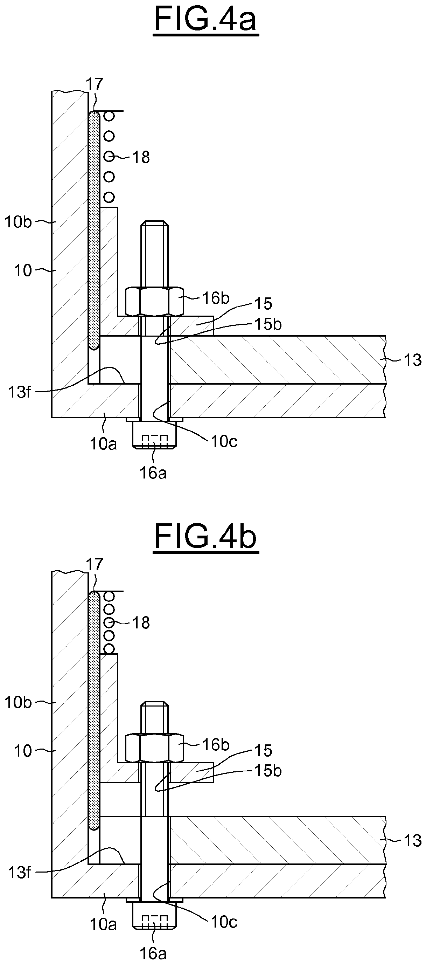

L'embrayage et le débrayage de l'interface 13 sur la deuxième équerre de rotation 10 est illustrée en détail sur les figures 4a et 4b. Lorsque la vis 16a est vissée, l'équerre de bridage 15 est entraînée en translation suivant le rail de guidage 17 par l'écrou 16b jusqu'à venir accoster la surface intérieure de l'interface 13. L'interface 13 se trouve ainsi serrée entre l'équerre de bridage 15 et la deuxième équerre de rotation 10. Lors du dévissage de la vis 16a, l'équerre de bridage 15 soumise à la force du ressort de rappel 18 se détache de l'interface 13 et permet à l'interface 13 soit d'être démontée, soit de créer un espace suffisant pour insérer un banc d'essai (non représenté) afin de tester le moteur M. L'interface débrayable 13 permet ainsi à un même dispositif d'assemblage 1 de supporter un moteur M pendant son assemblage ainsi que pendant son contrôle sur un banc d'essai.

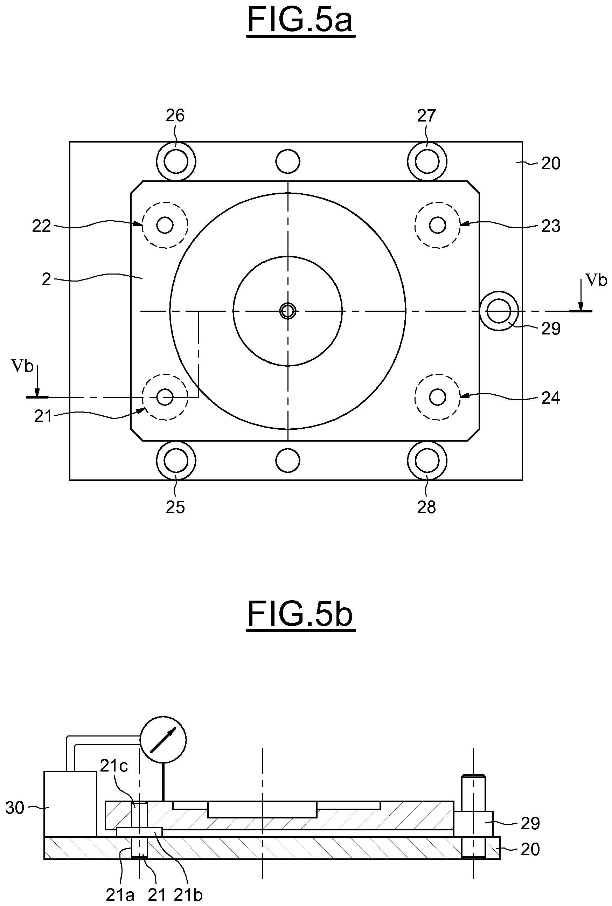

Le procédé d'assemblage et de contrôle du dispositif d'assemblage 1 est le suivant. Dans une première étape illustrée aux figures 5a, 5b, on dépose l'embase horizontale 2 sur un support d'assemblage et de contrôle 20. Le support d'assemblage 20 est de forme générale parallélépipédique et comporte de nombreux perçages (non référencés) destinés à coopérer avec des moyens de centrage 21 à 29.

Lors de la première étape l'embase horizontale 2 est centrée sur des moyens de centrage ou plots 21 à 24, présentant chacun une première portion cylindrique 21a destinée à s'insérer dans un alésage correspondant (non référencé) sur le support 20, une deuxième portion cylindrique 21b de diamètre supérieur à la première portion 21a et une troisième portion cylindrique 21c sensiblement identique à la première portion 21a destinée à s'insérer dans un alésage correspondant (non référencé) sur l'embase 2. Ensuite deux centreurs 25, 26, 27 28 et 29 sont disposés de manière analogue dans des alésages correspondants (non référencés) sur le support 20. Les centreurs 21 à 29 permettent de centrer l'embase horizontale 2 sur le support d'assemblage 20 afin de contrôler les dimensions de l'embase 2. Une fois l'embase 2 centrée sur le support 20, l'horizontalité de l'embase 2 est contrôlée par des premiers moyens de contrôle 30, tels que par exemple des niveaux.

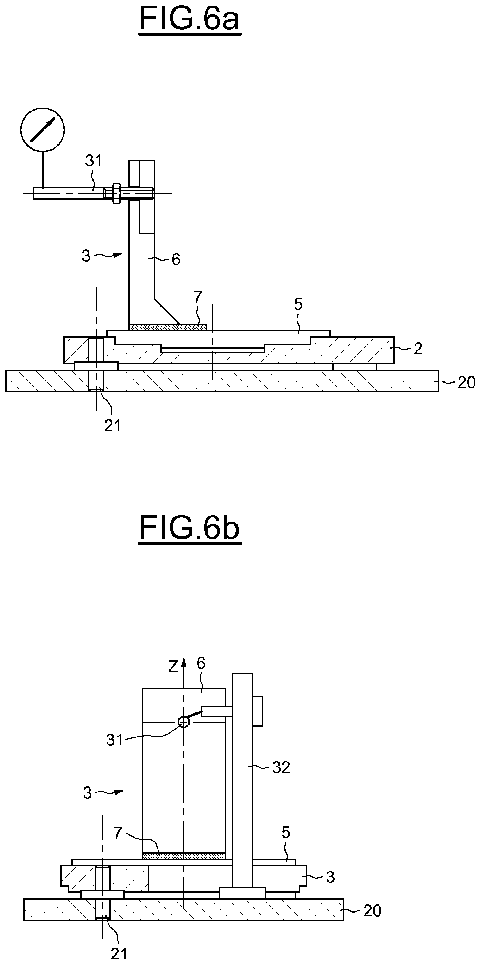

La deuxième étape d'assemblage ou de contrôle consiste à assembler ou contrôler la première équerre de rotation 3, illustrée aux figures 6a, 6b, dans laquelle on positionne le plateau horizontal 5 de l'équerre de rotation 3 sur l'embase horizontale 2. Un outil de mesure 31 est inséré dans un alésage correspondant de la portion verticale 6. Grace à des deuxièmes moyens de mesure 32, tel que par exemple une colonne de métrologie, on vérifie l'horizontalité et la hauteur suivant l'axe Z de l'équerre de rotation 3. Si la hauteur suivant l'axe Z n'est pas suffisante, une ou plusieurs cales 7 sont insérées entre le plateau horizontal 5 et la portion verticale 6 de l'équerre de rotation 3.

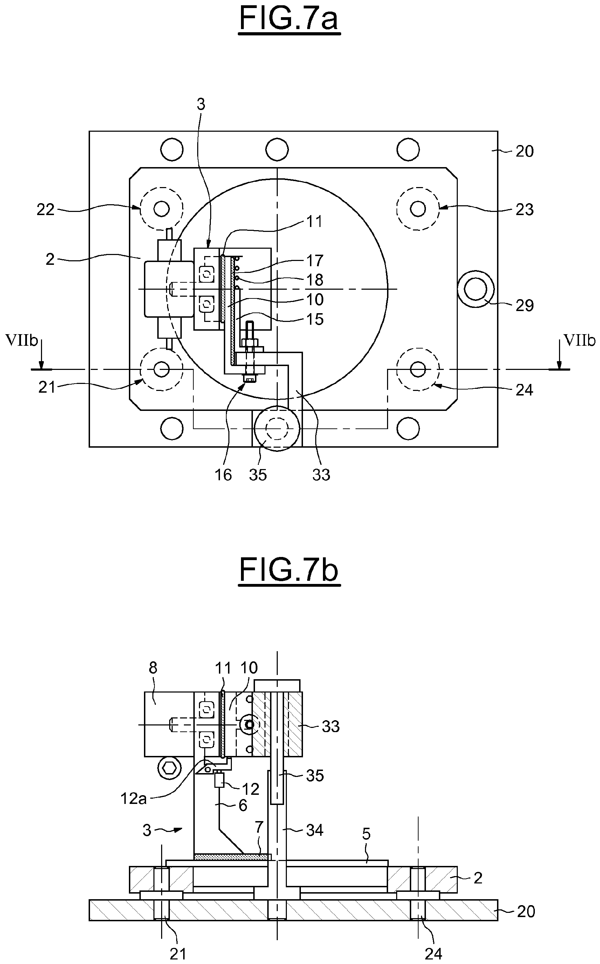

Une troisième étape d'assemblage consiste à assembler ou contrôler la deuxième équerre de rotation 10 ainsi que l'équerre de bridage 15. Tel qu'illustré sur les figures 7a et 7b, on positionne la deuxième équerre de rotation 10, le rail de guidage 17, l'équerre de bridage 15 et un premier référentiel 33 disposé à la place de l'interface de liaison 13. Le premier référentiel 33 présente à cet effet une forme substantiellement en « L » disposée entre l'équerre de bridage 15 et la deuxième équerre de rotation 10. L'ensemble est mis en rotation par le réducteur 8 afin de venir en buté contre la première butée escamotable 12 par l'intermédiaire du levier de butée 12a.

Une fois en butée, un deuxième référentiel 34, de forme générale cylindrique est inséré dans un alésage correspondant (non référencé) sur le support 20 et s'étend verticalement suivant l'axe Z, puis un troisième référentiel 35 est inséré dans des perçages (non référencés) pratiqués respectivement dans les premier et deuxième référentiels 33, 34 et permet de les lier. A cet effet, si les côtes de la palette d'assemblage 1 sont correctes, les perçages pratiqués dans les premier et deuxième référentiels 33, 34 sont coaxiaux. La même manipulation est effectuée lorsque l'ensemble vient en butée contre la butée escamotable 12 située symétriquement par rapport à l'équerre de rotation 3. Lorsque les référentiels 33,34, 35 ne sont pas coaxiaux et ne coïncident pas, une ou plusieurs cales 11 entre la deuxième équerre de rotation et le réducteur 8 peuvent être mises en place, afin un réglage suivant l'axe X.

La dernière étape d'assemblage consiste à interposer l'interface 13 entre l'équerre de bridage 15 et la deuxième équerre de rotation 10, tel qu'illustré sur la figure 1.

Ainsi, tous les éléments du dispositif d'assemblage moteur 1 sont assemblés et contrôlés sur un support d'assemblage et de contrôle unique, permettant rapidement de s'assurer de la qualité du montage.

## Revendications

1. Dispositif d'assemblage de moteur, destiné à être inséré sur une ligne d'assemblage, comprenant une embase horizontale (2), des premiers moyens de rotation (3) par rapport à un premier axe de rotation (Z) perpendiculaire à l'embase (2), des deuxièmes moyens de rotation (4) par rapport à un deuxième axe de rotation (X) perpendiculaire au premier axe de rotation (Z), une interface de liaison (13) destinée à relier le moteur (M) à l'embase (2) et des moyens de fixation réversible (14) de l'interface (13) sur l'embase (2), **caractérisé en ce que** les moyens de fixation réversible (14) comprennent une équerre de bridage (15) comprenant des centreurs (15a) capables de s'insérer dans des perçages correspondants (13a) sur l'interface (13) et des moyens de bridage (16) capables de fixer l'interface démontable (13) sur l'équerre de bridage (15).

2. Dispositif d'assemblage selon la revendication 1, dans lequel les premiers moyens de rotation (3) comprennent un plateau horizontal (5) relié à une portion verticale (6), formant première équerre de rotation (3), ledit plateau horizontal (5) étant en contact avec l'embase (2) par l'intermédiaire d'éléments roulants.

3. Dispositif selon la revendication 2, dans lequel le plateau horizontal (5) est relié à la portion verticale (6) par l'intermédiaire d'un premier moyen de réglage en position (7).

4. Dispositif d'assemblage selon la revendication 2 ou 3, dans lequel les deuxièmes moyens de rotation (4) comprennent un moyen de mise en rotation (8) fixé à une extrémité de la première équerre de rotation (3) et une deuxième équerre de rotation (10) entraînée en rotation par le moyen de mise en rotation (3) et fixée à l'interface démontable (13).

5. Dispositif d'assemblage selon la revendication 4, dans lequel la deuxième équerre de rotation (10) est reliée au moyen de mise en rotation (8) par un deuxième moyen de réglage en position (11).

6. Dispositif d'assemblage selon la revendication 4 ou 5, comprenant des moyens de guidage en translation (17) de l'équerre de bridage (15) par rapport à la deuxième équerre de rotation (10).

7. Dispositif d'assemblage selon l'une quelconque des revendications 4 à 6, dans lequel la première équerre de rotation (3) comprend des moyens d'arrêt en rotation (12, 12a) de la deuxième équerre de rotation (10).

8. Dispositif d'assemblage selon l'une quelconque des revendications 1 à 7, comprenant un ressort de rappel (17) relié à l'équerre de bridage (15).

9. Dispositif d'assemblage selon l'une quelconque des revendications 1 à 8, dans lequel les moyens de bridage (16) comprennent des visseries (16a, 16b).

10. Dispositif d'assemblage selon l'une des revendications précédentes, dans lequel l'interface démontable (13) comprend des moyens de centrage et de fixation (13d, 13e) d'un moteur.

11. Procédé d'assemblage et de contrôle du dispositif d'assemblage selon l'une des revendications précédentes, dans lequel :
- on positionne l'embase horizontale (2) sur un support d'assemblage et de contrôle (20) par des premiers moyens de centrage (21, 22, 23, 24, 25, 26, 27, 28, 29);
- on contrôle la position de l'embase (2) par des premiers moyens de contrôle (30) ;
- on positionne les premiers moyens de rotation (3) sur l'embase (2);
- on contrôle la position des premiers moyens de rotation (3) par des deuxièmes moyens de contrôle (31, 32);
- on positionne les deuxièmes moyens de rotation (4) sur les premiers moyens de rotation (3) et l'équerre de bridage (15);
- on contrôle la position des deuxièmes moyens de rotation (4) par des troisièmes moyens de contrôle (33, 34, 35) ; et
- on interpose l'interface démontable (13) entre l'équerre de bridage et les deuxièmes moyens de rotation (4).

## Patentansprüche

1. Vorrichtung zur Montage eines Motors, welche dazu bestimmt ist, in eine Montagelinie integriert zu werden, und welche einen horizontalen Sockel (2), erste Mittel zur Drehung (3) in Bezug auf eine zu dem Sockel (2) senkrechte Drehachse (Z), zweite Mittel zur Drehung (4) in Bezug auf eine zu der ersten Drehachse (Z) senkrechte Drehachse (X), eine Verbindungsschnittstelle (13), die dazu bestimmt ist, den Motor (M) mit dem Sockel (2) zu verbinden, und Mittel zur reversiblen Befestigung (14) der Schnittstelle (13) an dem Sockel (2) umfasst, **dadurch gekennzeichnet, dass** die Mittel zur reversiblen Befestigung (14) einen Anflanschwinkel (15), der Zentrierelemente (15a) umfasst, die in entsprechende Bohrungen (13a) in der Schnittstelle (13) eingeführt werden können, und Anflanschmittel (16), die in der Lage sind, die demontierbare Schnittstelle (13) an dem Anflanschwinkel (15) zu befestigen, umfassen.

2. Vorrichtung zur Montage nach Anspruch 1, wobei die ersten Mittel zur Drehung (3) eine mit einem vertikalen Abschnitt (6) verbundene horizontale Platte (5) umfassen, wobei sie ein erstes Drehwinkelstück (3) bilden, wobei sich die horizontale Platte (5) über Wälzelemente mit dem Sockel (2) in Kontakt befindet.

3. Vorrichtung nach Anspruch 2, wobei die horizontale Platte (5) mit dem vertikalen Abschnitt (6) über ein erstes Mittel zur Positionseinstellung (7) verbunden ist.

4. Vorrichtung zur Montage nach Anspruch 2 oder 3, wobei die zweiten Drehungsmittel (4) ein Drehantriebsmittel (8), das an einem Ende des ersten Drehwinkelstücks (3) befestigt ist, und ein zweites Drehwinkelstück (10), das von dem Drehantriebsmittel (3) drehend angetrieben wird und an der demontierbaren Schnittstelle (13) befestigt ist, umfassen.

5. Vorrichtung zur Montage nach Anspruch 4, wobei das zweite Drehwinkelstück (10) mit dem Drehantriebsmittel (8) durch ein zweites Mittel zur Positionseinstellung (11) verbunden ist.

6. Vorrichtung zur Montage nach Anspruch 4 oder 5, welche Mittel zur Führung (17) des Anflanschwinkels (15) bei der Translation in Bezug auf das zweite Drehwinkelstück (10) umfasst.

7. Vorrichtung zur Montage nach einem der Ansprüche 4 bis 6, wobei das erste Drehwinkelstück (3) Mittel zur Rotationsarretierung (12, 12a) des zweiten Drehwinkelstücks (10) umfasst.

8. Vorrichtung zur Montage nach einem der Ansprüche 1 bis 7, welche eine Rückholfeder (17) umfasst, die mit dem Anflanschwinkel (15) verbunden ist.

9. Vorrichtung zur Montage nach einem der Ansprüche 1 bis 8, wobei die Anflanschmittel (16) Schrauben (16a, 16b) umfassen.

10. Vorrichtung zur Montage nach einem der vorhergehenden Ansprüche, wobei die demontierbare Schnittstelle (13) Mittel zur Zentrierung und Befestigung (13d, 13e) eines Motors umfasst.

11. Verfahren zur Montage und zur Kontrolle der Vorrichtung zur Montage nach einem der vorhergehenden Ansprüche, wobei:
- der horizontale Sockel (2) durch erste Mittel zur Zentrierung (21, 22, 23, 24, 25, 26, 27, 28, 29) auf einem Träger zur Montage und Kontrolle (20) positioniert wird;
- die Position des Sockels (2) durch erste Kontrollmittel (30) kontrolliert wird;
- die ersten Mittel zur Drehung (3) auf dem Sockel (2) positioniert werden;
- die Position der ersten Mittel zur Drehung (3) durch zweite Kontrollmittel (31, 32) kontrolliert wird;
- die zweiten Mittel zur Drehung (4) auf den ersten Mittel zur Drehung (3) und dem Anflanschwinkel (15) positioniert werden;
- die Position der zweiten Mittel zur Drehung (4) durch dritte Kontrollmittel (33, 34, 35) kontrolliert wird; und
- die demontierbare Schnittstelle (13) zwischen dem Anflanschwinkel und den zweiten Mitteln zur Drehung (4) angeordnet wird.

## Claims

1. Device for assembling an engine, intended to be incorporated into an assembly line, said device comprising a horizontal base (2), first means for rotation (3) with respect to a first rotational axis (Z) perpendicular to the base (2), second means for rotation (4) with respect to a second rotational axis (X) perpendicular to the first rotational axis (Z), a connecting interface (13) intended to connect the engine (M) to the base (2) and means for reversibly fixing (14) the interface (13) on the base (2), **characterized in that** the means for reversibly fixing (14) comprise a clamping bracket (15) comprising centering means (15a) capable of being inserted in the corresponding through-holes (13a) on the interface (13) and clamping means (16) capable of fixing the removable interface (13) on the clamping bracket (15).

2. Assembly device according to Claim 1, in which the first means for rotation (3) comprise a horizontal plate (5) which is connected to a vertical portion (6), forming a first bracket for rotation (3), said horizontal plate (5) being in contact with the base (2) by means of rolling elements.

3. Assembly device according to Claim 2, in which the horizontal plate (5) is connected to the vertical portion (6) by means of a first means for adjusting the position (7).

4. Assembly device according to Claim 2 or 3, in which the second means for rotation (4) comprise a means for setting in rotation (8) which is fixed to an end of the first bracket for rotation (3) and a second bracket for rotation (10) which is rotatingly driven by the means for setting in rotation (3) and is fixed to the removable interface (13).

5. Assembly device according to Claim 4, in which the second bracket for rotation (10) is connected to the means for setting in rotation (8) by a second means for adjusting the position (11).

6. Assembly device according to Claim 4 or 5, comprising means for guiding in translation (17) the clamping bracket (15) with respect to the second bracket for rotation (10).

7. Assembly device according to any one of Claims 4 to 6, in which the first bracket for rotation (3) comprises means for stopping the rotation (12, 12a) of the second bracket for rotation (10).

8. Assembly device according to any one of Claims 1 to 7, comprising a return spring (17) which is connected to the clamping bracket (15).

9. Assembly device according to any one of Claims 1 to 8, in which the clamping means (16) comprise screw-type elements (16a, 16b).

10. Assembly device according to one of the preceding claims, in which the removable interface (13) comprises means for centering and fixing (13d, 13e) to an engine.

11. Method for assembling and monitoring an assembly device according to one of the preceding claims, in which:
- the horizontal base (2) is positioned on an assembly and monitoring support (20) by first centering means (21, 22, 23, 24, 25, 26, 27, 28, 29);
- the position of the base (2) is monitored by first monitoring means (30);
- the first means for rotation (3) are positioned on the base (2);
- the position of the first means for rotation (3) is monitored by second monitoring means (31, 32);
- the second means for rotation (4) are positioned on the first means for rotation (3) and the clamping bracket (15);
- the position of the second means for rotation (4) is monitored by third monitoring means (33, 34, 35); and
- the removable interface (13) is inserted between the clamping bracket and the second rotation means (4).
